# DEMANDE DE BREVET EUROPEEN

(11) **EP 2 541 240 A1**
(43) Date de publication de la demande: **02.01.2013**
(21) Numéro de dépôt: 11171834.2
(22) Date de dépôt: 29.06.2011
(51) Int. Cl.: G01N 27/82

(54) **Procédé et dispositif de contrôle de la conformité de fabrication d'un fil de soudage**

(71) Demandeur: FRO - Air Liquide Welding Italia S.P.A., 37135 Verone (IT)
(72) Inventeur: Scappin, Michele, 31003 Castelfranco (IT); Zambon, Devis, 35013 Cap (IT)
(74) Mandataire: Pittis, Olivier

(57) **Abrégé**

L'invention porte sur un procédé de contrôle de la conformité d'au moins une partie d'un fil (F) de soudage, dans lequel on soumet au moins une partie d'un fil (F) de soudage à un champ magnétique ; on détermine la perméabilité magnétique de la partie de fil (F) considérée ; on compare la valeur de perméabilité magnétique déterminée au moins une valeur de référence, et on déduit de ladite comparaison, une conformité ou non-conformité de tout ou partie du fil (F) considéré. Dispositif de contrôle de la conformité d'au moins une partie d'un fil (F) de soudage pour la mise en oeuvre dudit procédé de contrôle.

## Description

L'invention concerne un procédé et un dispositif permettant de contrôler, de façon non destructive, la conformité, en particulier la qualité, des fils pleins et des fils fourrés de soudage.

Les fils fourrés et les fils pleins sont utilisés dans certains procédés de soudage, notamment à l'arc, par exemple en soudage MIG/MAG ou en soudage à l'arc submergé.

Un fil fourré est habituellement formé d'une enveloppe externe, encore appelée feuillard, formée d'une bande métallique mise sous forme tubulaire, et d'un flux de interne formé d'éléments de remplissage, tels des poudres ou des granulés.

Les bords longitudinaux du tube formant le fil peuvent être soit soudés à l'arc ou par faisceau laser par exemple, soit simplement rapprochés l'un de l'autre, donc non soudés.

Dans tous les cas, il est très difficile de vérifier si la distribution du flux interne dans le fil a été correctement opérée ou non pendant le remplissage. En effet, le fil est extérieurement le même sur toute sa longueur et il n'est donc pas possible détecter des éventuelles variations internes par un simple examen visuel du feuillard externe.

Or, si la distribution du flux n'est pas homogène en composition et/ou en répartition au sein de l'enveloppe, le fil obtenu va conduire à des performances de soudage non constantes, ce qui n'est pas acceptable au plan industriel.

En effet, c'est la composition du fourrage, c'est-à-dire du flux interne, qui détermine les propriétés du dépôt du fil, à savoir ses propriétés mécaniques, chimiques, de résistance à la corrosion ou à l'abrasion.

Il est donc primordial de pouvoir vérifier la qualité du fourrage du fil pendant toute la fabrication dudit fil pour assurer une qualité constante du fil sur toute sa longueur.

En particulier, il est impératif de pouvoir s'assurer de la conformité du fil, en particulier de sa qualité, c'est-à-dire de son homogénéité de fabrication pour éviter la production de fils comprenant des portions sans fourrage, c'est-à-dire vide, ou alors des portions contenant une quantité de fourrage hétérogène, c'est-à-dire avec des excès de fourrage dans certaines portions de l'enveloppe ou, à l'inverse, des déficits dans d'autres portions de ladite enveloppe, c'est-à-dire plus généralement de pouvoir détecter rapidement et efficacement les fils ou portions de fils ayant une qualité de fourrage ne correspondant pas à la formulation souhaitée.

Par ailleurs, sur les lignes de production en continu, les fils de formulations différentes, qu'ils soient pleins ou fourrés, sont normalement produits à la suite les uns des autres après avoir étés soudés ensemble, puis passés dans les machines de production : formage bande, laminage, tréfilage, bobinage ...

Or, détecter la jonction, à la fin du procédé de fabrication, entre les fils de compositions différentes de manière à pouvoir les séparer les uns des autres, n'est pas chose aisée et peut dès lors conduire à des erreurs de conditionnement, dues à des erreurs d'identification de fils de formulations différentes.

Le problème à résoudre est dès lors de pouvoir détecter d'une manière simple, rapide et efficace la conformité ou non-conformité d'un fil de soudage, c'est-à-dire tout défaut de qualité et/ou de fabrication d'un fil plein ou fourré, en particulier une absence de fourrage, une hétérogénéité quantitative ou qualitative du fourrage ou encore un passage d'une formulation de fil à une autre.

La solution de l'invention concerne un procédé de contrôle de la conformité d'au moins une partie d'un fil de soudage, dans lequel :
a) on soumet au moins une partie d'un fil de soudage à un champ magnétique,
b) on détermine la perméabilité magnétique de la partie de fil considérée,
c) on compare la valeur de perméabilité magnétique déterminée à l'étape b) au moins une valeur de référence, et
d) on déduit de la comparaison de l'étape c), une conformité ou non-conformité de tout ou partie du fil considéré.

Dans le cadre de la présente invention, les termes « contrôler la conformité d'un fil de soudage » signifient, d'une façon générale, une détection de tout défaut de qualité ou de fabrication d'un fil de soudage, en particulier une absence de fourrage d'un fil fourré, toute hétérogénéité quantitative ou qualitative du fourrage d'un fil fourré, ou encore tout passage d'une formulation à une autre d'un fil de soudage qu'il soit un fil plein ou fourré.

Dit autrement, le procédé de l'invention repose sur une détection de différences de nuances de formulation d'un fil, y compris d'une absence totale de flux dans l'enveloppe d'un fil fourré, une différence de composition entre plusieurs portions d'un même fil ou encore le lieu de jonction entre deux fils de compositions différentes, et ce, par examen de la perméabilité magnétique du fil considéré laquelle est fonction de la composition chimique/métallurgique dudit fil, notamment de la composition du flux ou fourrage d'un fil fourré.

Selon le cas, le procédé de l'invention peut comprendre l'une ou plusieurs des caractéristiques techniques suivantes :
- la perméabilité magnétique est transformée en un signal de tension électrique à partir duquel on détermine une conformité ou non-conformité de la partie de fil testée.
- la détermination de la perméabilité magnétique est effectuée au moyen d'un (ou plusieurs) circuit comprenant un inducteur traversé par le fil à tester.
- on met en oeuvre un circuit comprenant, en série, une résistance et un inducteur traversé par le fil à tester.
- à l'étape b), on détecte au moins un signal de tension sinusoïdale ; on convertit ledit au moins un signal de tension sinusoïdale en au moins un signal de tension continue ; et à l'étape c), on compare ledit au moins un signal de tension continue avec au moins une valeur de tension de référence.
- la valeur de tension de référence est une valeur mémorisée.
- la valeur de tension de référence est une valeur mesurée à partir d'un fil de référence, de préférence un fil agencé dans un circuit de type RL.
- ledit au moins un signal de tension sinusoïdale est converti en au moins un signal de tension continue par un redresseur, de préférence le signal de tension continue est ensuite amplifié par un amplificateur.
- l'inducteur est alimenté par un générateur de tension délivrant une tension de fréquence comprise entre 10 et 80 Hz, de préférence entre 25 et 40 Hz, pour détecter une variation de nuance ou de remplissage, ou comprise entre 200 et 10 000 Hz pour détecter une mauvaise étanchéité du fil.
- le défaut ou la non-conformité du fil considéré sont choisis parmi une variation de la quantité de poudre de remplissage dans un fil fourré, une absence totale de poudre de remplissage dans au moins une portion d'un fil fourré, une variation de qualité chimique ou métallurgique d'un fil plein ou fourré, un changement de type de fil entre deux fils de qualités ou de compositions différentes, une mauvaise étanchéité dans au moins une portion d'un fil fourré, et une variation de tolérance de diamètre d'un fil.
- le fil est un fil fourré ou un fil plein, de préférence de diamètre compris entre 0,8 et 5 mm.
- il est mis en oeuvre sur une ligne de production de fil et que le contrôle s'effectue en continu de manière à tester toute la longueur de fil produite sur ladite ligne.
- à l'étape d), lorsqu'on détecte une non-conformité de tout ou partie du fil considéré, une alarme sonore ou visuelle est déclenchée ou une information de non-conformité affichée sur un dispositif d'affichage visuel, tel un écran.

En d'autres termes, selon l'invention, on met en oeuvre un procédé de contrôle de conformité et/ou de qualité, en ligne ou hors ligne d'un fil donné, qu'il soit fourré ou plein, de sorte de détecter l'un ou l'autre des défauts suivants :
- une variation de la quantité de poudre de remplissage dans un fil fourré,
   - une absence totale de poudre dans une ou des parties d'un fil fourré,
- une variation de qualité chimique ou métallurgique d'un fil plein ou fourré,
- un changement de type de fil, pendant la production ou le soudage, par détection d'une soudure entre deux fils de qualités ou de compositions différentes,
- une mauvaise étanchéité localisée d'un fil fourré pouvant provoquer une absorption d'humidité ambiante ou d'un liquide utilisé pendant le processus de fabrication, telle de l'huile notamment, qui engendrerait une variation localisée de la composition du flux interne d'un fil fourré, et/ou
- une variation des tolérances de diamètre.

Pour ce faire, le procédé de contrôle de la qualité du fil selon l'invention est basé sur une mesure de la variation d'un champ magnétique qui change en fonction de la perméabilité magnétique dans un inducteur traversé par le fil considéré.

Le champ magnétique est généré par un inducteur dans lequel passe le fil et est modifié par la présence du fil au sein de l'inducteur. Il est alors possible de détecter des variations au sein du fil, en détectant des variations du champ magnétique généré par l'inducteur, lorsque la qualité du fil ou la quantité du fourrage d'un fil fourré varie ou lorsque la chimie ou composition d'un fil plein varie ou encore lorsque l'une ou plusieurs étapes du processus de fabrication (e.g. tréfilage, laminage, recuit, compactage de la poudre ...) se sont déroulées anormalement et ont conduit à une modification de la perméabilité magnétique du fil.

Ceci vaut aussi bien pour les fils pleins utilisés pour le soudage MIG/MAG ou en soudage à l'arc submergé que pour les fils fourrés.

De manière générale, la perméabilité magnétique caractérise la faculté d'un matériau, ici le fil, à modifier un champ magnétique, c'est-à-dire à faire varier les lignes de flux magnétique dudit champ magnétique. La valeur de perméabilité magnétique dépend du milieu dans lequel le champ est produit. La canalisation du champ magnétique dans un matériau conducteur, tel un fil de soudage, varie en fonction de l'analyse chimique du métal, du fourrage (en quantité et chimique), des discontinuités phtisiques et chimiques du fil.

Partant de là, il est possible donc de déterminer tout défaut ou toute non-conformité d'une partie ou de tout un fil de soudage en se basant sur une mesure de la perméabilité magnétique du fil considéré lorsque celui-ci traverse l'inductance servant à générer le champ magnétique, et en comparant les mesures faites à des valeurs de références représentatives d'un fil sans défaut ou conforme.

L'invention concerne aussi un dispositif de contrôle de la conformité d'au moins une partie d'un fil de soudage comprenant :
- un générateur de tension électrique,
- un premier circuit avec un inducteur et une résistance alimenté par le générateur de tension pour créer un champ magnétique au sein de l'inducteur,
- un redresseur qui transforme au moins un signal de tension alternative provenant du circuit en au moins un signal de tension continue,
- un amplificateur différentiel apte à et conçu pour comparer au moins un signal de tension continue issu du redresseur avec au moins une valeur de tension de référence,
- un dispositif d'alarme, et
- un système de gestion du signal coopérant avec l'amplificateur différentiel et déclenchant le dispositif d'alarme en cas de détection d'un fil non conforme après comparaison des signaux par l'amplificateur différentiel.

Selon le cas, le dispositif de l'invention peut comprendre l'une ou plusieurs des caractéristiques techniques suivantes :
- le système de gestion du signal est un contrôleur logique programmable ou un ordinateur.
- le dispositif d'alarme est sonore ou visuel.
- il comporte un mémoire pour mémoriser au moins une valeur de tension de référence ou un deuxième circuit avec un second inducteur et une résistance alimenté par le générateur de tension pour créer un champ magnétique au sein de l'inducteur, un fil de référence étant placé dans le second inducteur.

L'invention va maintenant être mieux comprise grâce aux Figures 1 à 5 parmi lesquelles :
- la Figure 1 représente le principe de fonctionnement d'un premier mode de réalisation d'un dispositif de mise en oeuvre du procédé de l'invention,
- la Figure 2 schématise les variations de tension au niveau du noeud central d'un circuit à condensateur et résistance d'un dispositif selon les Figures 1 et 3, détectées pour trois fils différents,
- la Figure 3 détaille la partie RL du circuit 3 de la Figure 1, et
- la Figure 4 schématise les variations de tension au niveau du noeud central d'un circuit à condensateur et résistance d'un dispositif selon les Figures 1 et 3, détectées pour un fil fourré comportant une portion sans flux interne.
- la Figure 5 schématise le principe de fonctionnement d'un deuxième mode de réalisation d'un dispositif de mise en oeuvre du procédé de l'invention avec balance de tension entre deux circuits RL.

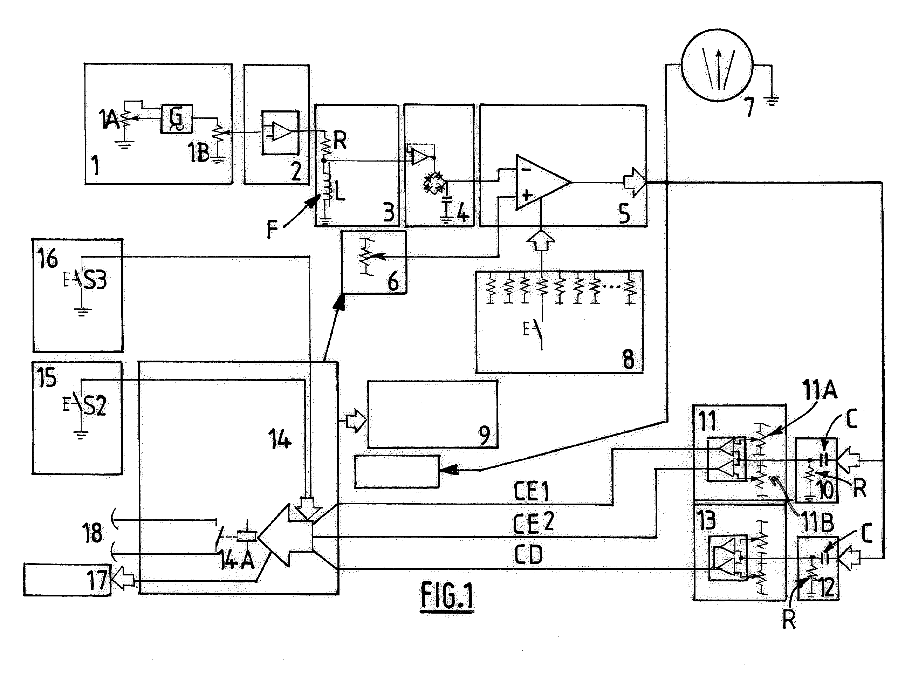

Le principe de fonctionnement d'un premier mode de réalisation d'un dispositif de mise en oeuvre du procédé de l'invention est illustré sur les Figures 1, 3 et 5.

Un tel dispositif vient avantageusement s'incorporer directement sur une ligne de fabrication automatisée de fil de soudage, c'est-à-dire une ligne de fabrication comprenant des moyens d'entraînement de fil et des moyens de formage, tels des galets rotatifs motorisés. Plus précisément, dans une ligne de production de fil fourré, on part d'une bande métallique ou « feuillard », qui constitue l'enveloppe externe du fil fourré, par exemple une bande en acier typiquement de 9 à 30 mm de largeur et de 0,4 à 1,5 mm d'épaisseur, qui est amenée de manière continue par des moyens d'entraînement de fil, en général des galets d'entraînement rotatifs motorisés, et qui est progressivement pliée et mise en forme de U par des moyens de formage, tel que des galets formeurs ou analogue, puis remplie de matières premières ou éléments de remplissage, c'est-à-dire de flux de remplissage contenant des éléments métalliques et/ou non métalliques. Après formage en « U » et remplissage avec les matières premières constituant le flux interne, des moyens de formage poursuivent la mise en forme de la bande pour aboutir à une forme tubulaire en « O » non scellée, encore appelé pré-fil, laquelle forme tubulaire est ensuite soudée par faisceau laser ou arc électrique venant fondre puis souder les bords longitudinaux l'un avec l'autre. Le taux de remplissage du tube est généralement inférieur à 50%, de préférence entre 8 et 45% en masse par rapport à la masse du fil. Des étapes de tréfilage/laminage subséquentes permettent de mettre le fil aux dimensions finales désirées, en général un diamètre de 0,8 à 5 mm environ. Ces étapes sont mises en oeuvre par des dispositifs de tréfilage et de laminage.

A l'issue de toutes ces étapes, on obtient un fil ayant une longueur de plusieurs dizaines, voire centaines de mètres, lequel est censé avoir une composition et des propriétés donnés. Toutefois, comme expliqué, il arrive que ce fil présente des défauts, c'est-à-dire une non-conformité, tel un défaut de remplissage ou une composition de flux ayant varié de manière intempestive dans une (ou plusieurs) portion de sa longueur, ce qui conduit à un fil non-conforme aux spécifications souhaitées sur tout ou partie de sa longueur.

Il convient donc de pouvoir détecter et localiser la ou les portions de fil non-conformes pour pouvoir les éliminer.

De même, lorsque plusieurs fils de compositions différentes sont produits à la suite les uns des autres, comme cela se fait habituellement, dans le but de ne pas stopper la chaîne de fabrication en continu, il faut pouvoir détecter et localiser les fils de compositions différentes pour les séparer les uns des autres.

Pour ce faire, on met en oeuvre un dispositif et un procédé selon l'invention.

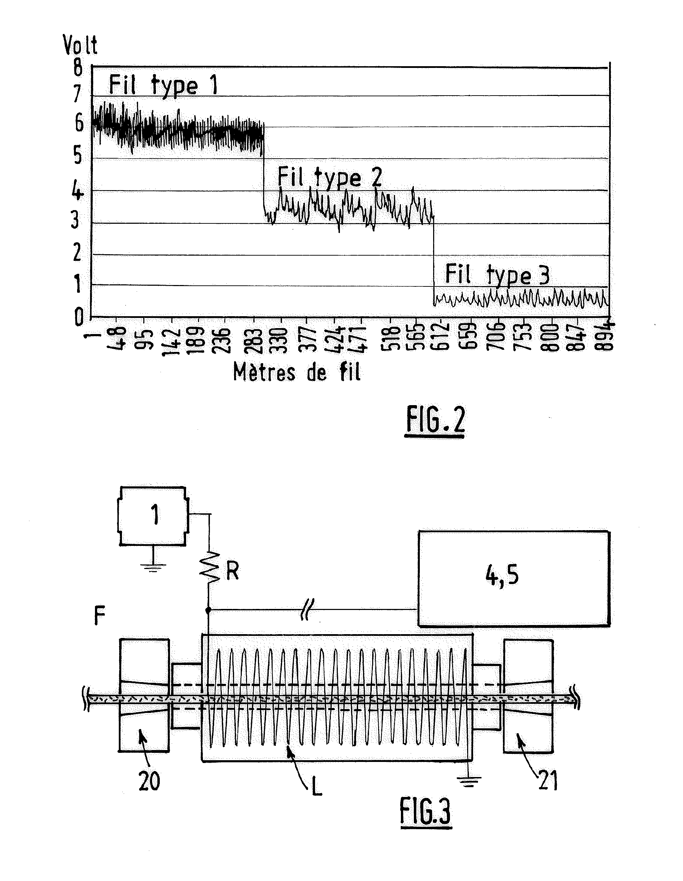

Plus précisément, dans le premier mode de réalisation illustré en Figure 1 et 3, un dispositif selon l'invention comprend un circuit 3 de type RL comprenant une résistance R et un inducteur L agencées en série. Ledit circuit 3 est alimenté par un générateur 1 de tension sinusoïdale à basse fréquence et à faible distorsion, c'est-à-dire dont la fréquence est normalement inférieure à 80 Hz, préférablement comprise entre 10 et 50 Hz.

Le générateur 1 inclut un premier potentiomètre 1A qui permet de faire varier ou d'ajuster les valeurs de fréquence et un second potentiomètre 1B, placé en sortie du générateur 1, pour changer ou ajuster l'amplitude du signal de tension de sortie.

La sortie du générateur 1 est reliée à un circuit amplificateur 2 qui augmente l'amplitude du signal de tension délivré par le générateur 1.

Ensuite, le signal en sortie du circuit amplificateur 2 est appliqué au circuit 3 de type RL comprenant l'inducteur L et la résistance R en série.

Le fil F à tester, par exemple un fil fourré, est placé à l'intérieur de l'inducteur L du circuit 3, de préférence une bobine, spécifiquement conçu et dimensionné pour permettre le passage d'un fil de 0,8 à 5 mm de diamètre.

Les mesures sont faites à température ambiante, soit entre 0 et 40°C, typiquement de l'ordre d'environ 20 à 25°C.

Par effet du champ magnétique et donc du courant circulant à l'intérieur de la bobine L, on détecte, dans le noeud central du circuit 3, une tension sinusoïdale dont le sommet de tension varie en fonction des caractéristiques de perméabilité magnétique du fil F testé.

Le (les) signal de tension sinusoïdale sont ensuite envoyés vers un circuit redresseur 4 qui convertit le signal de tension alternatif généré par circuit 3 en une tension continue.

La tension redressée par le redresseur 4 varie en fonction de l'impédance de la bobine L et donc en fonction des propriétés de perméabilité magnétique du fil à tester.

On emploie une fréquence suffisante pour obtenir une sensibilité satisfaisante du système. La fréquence préférentielle pour détecter les variations de nuance ou de remplissage est comprise entre 10 et 80 Hz, de préférence encore entre 25 et 40 Hz. Toutefois, il est à noter que la fréquence préférentielle pour détecter une mauvaise étanchéité du fil, lorsque c'est ce paramètre que l'on souhaite détecter, est normalement comprise entre 200 et 10 000 Hz.

Comme détaillé en Figure 3, la bobine L du circuit 3 est placée dans un système de guidage, de préférence entre deux filières 20, 21, ou tout autre dispositif de compensation, par exemple des galets de guidage, apte à et conçu pour réduire ou minimiser les vibrations du fil F dans la bobine L. En effet, les vibrations mécaniques du fil F à l'intérieur de la bobine L ou les autres facteurs doivent être minimisées pour obtenir un signal de courant aussi stable que possible.

La tension redressée par le redresseur 4, qui est fonction des propriétés de perméabilité magnétique du fil, est comparée avec une tension calibrée par un potentiomètre 6 (balance de circuit) qui fait référence. Cette référence de tension 6 peut être modifiée en continu dans la logique 14, pour filtrer les mauvais signaux du système engendrés par des dérives thermiques et magnétiques de l'appareil ou par de légères variations de diamètre du fil.

L'amplificateur différentiel 5 comprend en outre une entrée pour faire varier l'amplification faite au moyen d'un commutateur 8 multi-position utilisable pour sélectionner différentes résistances R en série. Chaque position de sélection correspond à des valeurs différentes de résistance et donc d'amplification, et est choisie en fonction du diamètre du fil F à tester, typiquement entre 0,8 et 5 mm environ.

Le signal de sortie de l'amplificateur différentiel 5 est mesuré au moyen d'un voltmètre 7 du type à zéro central de manière à équilibrer la tension à 0 V, lors de l'étalonnage du dispositif.

Les déviations thermiques des circuits, la variation de diamètre du fil pendant la production et d'autres paramètres peuvent influencer l'équilibre de la tension et donc l'étalonnage du dispositif Cette déviation, lente dans le temps, peut être compensée soit en faisant passer le signal à travers un circuit 10 de type CR à condensateur C et résistance R de taille appropriée, soit en utilisant un logiciel de compensation automatique qui va modifier le potentiomètre 6 (comme déjà expliqué) ; de tels logiciels étant disponibles dans le commerce.

La fonction du circuit 12 de type CR à condensateur et résistance est similaire à celle du circuit CR 10 mais avec des tailles différentes de condensateur C et résistance R pour permettre une sensibilité plus élevée pendant les changements de type de fil.

On prévoit deux comparateurs à double fenêtre 11, 13 pour vérifier en continu les petites variations de tension provoquées par le changement de champ magnétique. Les comparateurs, avec sensibilités différentes, activent des sorties digitales qui sont utilisées pour des alarmes. Le premier comparateur à double fenêtre 11 est utilisé pour signaler tout défaut de remplissage d'un fil fourré F. Le deuxième comparateur, beaucoup plus sensible, à double fenêtre 13 est utilisé pour détecter les différences de composition chimique des fils pleins ou fourrés, ou les jonctions entre deux types de fils différents (tels un fil plein et un fil fourré) qui en général ont la nécessité d'une sensibilité plus élevée.

Des potentiomètres 13A, 13B, 11A et 11B permettent de faire varier la sensibilité de l'activation des comparateurs 11 et 13.

Les comparateurs 11, 13 sont équipés de sortie digitales, c'est-à-dire les canaux d'erreur négative CE1, positive CE2, et de discrimination CD qui sont reliés à un contrôleur logique programmable 14.

La gestion du signal est effectuée par ce contrôleur logique programmable 14 de type PLC (Programmable Logic Controller) ou un ordinateur équipée par un logiciel permettant :
- d'activer une alarme ou une alerte en fonction de la détection d'un fil ou d'une portion de fil non-conforme,
- d'arrêter la machine (en 18) : bobineuse, tréfileuse, laminoir, soudeuse ....
- d'allumer un dispositif visuel ou sonore ou un écran 9 suite à une détection de variation de qualité de fil et/ou
- d'enregistrer les valeurs de qualité pour permettre une traçabilité de production du fil F.

La détection d'un fil non-conforme se fait par comparaison des valeurs mesurées avec des valeurs de tension de référence qui sont par exemple enregistrées dans une mémoire et ont été obtenues par étalonnage préalable du dispositif.

L'étalonnage de l'appareil peut être fait, par exemple, avec un (ou des) fil de diamètre et de perméabilité connus.

Optionnellement, le dispositif peut être équipé d'un compteur 17 de longueur du fil qui permet d'identifier et enregistrer la position exacte de la portion de fil non-conforme et éventuellement de l'éliminer de façon automatique.

Donc, en résumé, selon l'invention, pour s'assurer de la conformité d'un fil de soudage pendant ou après son processus de fabrication, on crée d'abord un champ magnétique au travers d'un inducteur L alimenté par un générateur de courant, puis on y introduit le fil à tester, ce qui va changer le champ magnétique et donc la tension mesurée aux bornes de l'inducteur L.

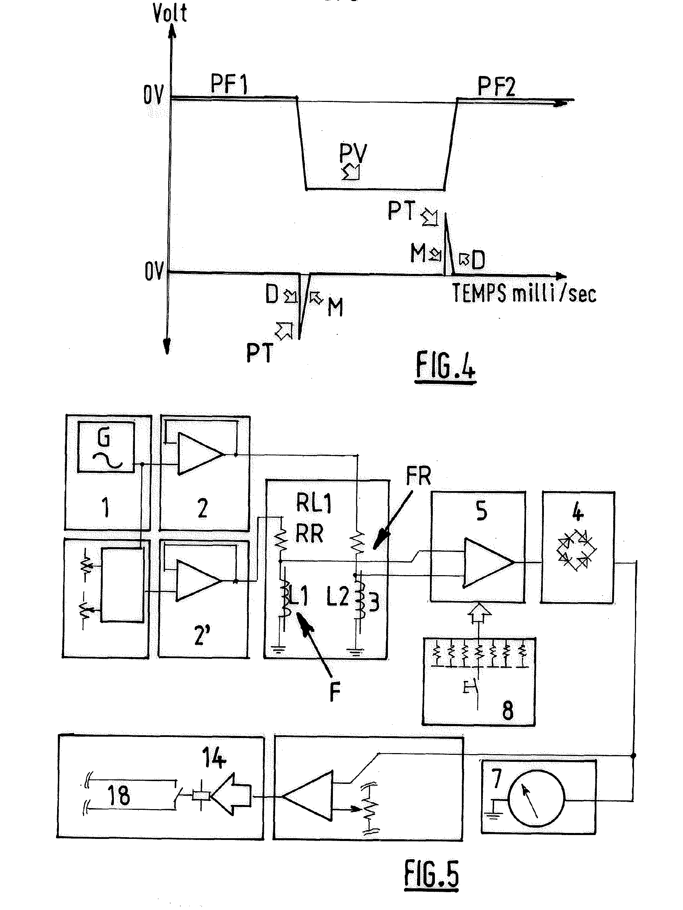

Ensuite, en comparant la tension mesurée dans l'inducteur avec, une tension standard (via la balance de circuit 6 de la Fig. 1) ou avec une tension provenant d'un autre inducteur (L2 de la Fig. 5) avec un fil standard, on va discriminer un fil conforme d'un fil non conforme.

De plus, on va aussi contrôler aussi la variation relative de la tension, dans l'inducteur du fil à tester, par rapport à une valeur moyenne de la même tension mesurée dans les derniers mètres de fil testé, ce qui permet de détecter les petites de nuance et de qualité du fil.

En cas de non-conformité détectée, un système d'alarme va être activé.

La Figure 2 est une représentation de la tension (en volt) au noeud central du circuit condensateur-résistance 10 de la Figure 1 obtenue pour trois fils différents soudés les uns à la suite des autres.

Comme on le voit, grâce au dispositif et au procédé de l'invention, on peut détecter une première chute de tension à environ 300 mètres du début du fil correspondant à une variation de perméabilité magnétique du fil à cet endroit lequel correspond au site de raccordement d'un premier fil ayant une première composition donnée (Fil type 1) à un deuxième fil ayant une deuxième composition donnée (Fil type 2) différente de celle du fil type 1.

De même, une autre chute de tension, donc de perméabilité magnétique, est détectée à environ 600 mètres du début du fil, correspondant au site de raccordement du deuxième fil à un troisième fil ayant une troisième composition donnée (Fil type 3) différente de celle des fils type 1 et type 2.

Comme on le comprend, le procédé et le dispositif de l'invention permettent de résoudre le problème de détection aisée, non destructive et efficace de fils de compositions différentes soudés les uns aux autres, lors de leur production sur une ligne de fabrication automatisée de fil de soudage.

La Figure 4 est analogue à la Figure 2. Elle montre l'évolution de la tension au noeud central du circuit condensateur-résistance, lors du passage entre la bobine d'un fil F qui présente successivement une première portion PF1 avec fourrage interne, i.e. un flux, une deuxième portion vide PV, c'est-à-dire sans fourrage, et une troisième portion PF2 avec fourrage interne.

Comme on peut le voir, les portions PF1, PF2 et PV peuvent être identifiées les unes par rapport aux autres grâce à l'apparition de pics de tension PT au cours du temps, c'est-à-dire des pentes de montée M et de descente D de courant correspondant à des charges et décharges du condensateur du circuit RC 10 de la Figure 1. En mettant ces pics de tension PT en relation avec la longueur des fils analysés, on en déduit la zone sans flux interne devant être éliminée.

La Figure 5 schématise le principe de fonctionnement d'un deuxième mode de réalisation d'un dispositif de mise en oeuvre du procédé de l'invention avec balance de tension entre deux circuits 3 de type RL dont l'un comprend, comme dans le premier mode de réalisation de la Figure 1, le fil F à tester et dont l'autre comprend, dans ce cas, un fil de référence FR.

Plus précisément, le générateur de courant 1 est reliée à deux circuits amplificateurs 2, 2' qui augmente l'amplitude du signal de tension délivré par le générateur 1.

L'un 2 des circuits amplificateurs est relié au premier circuit 3 de type RL comprenant une résistance R et un inducteur L1 agencées en série au sein duquel est agencé un fil de référence FR, alors que l'autre 2' des circuits amplificateurs est relié au deuxième circuit 3 de type RL comprenant une résistance R et un inducteur L2 agencées en série au sein duquel est agencé un fil F à tester.

Comme précédemment, les circuits 3 sont alimentés par le générateur 1 de tension sinusoïdale à basse fréquence et à faible distorsion, c'est-à-dire dont la fréquence est normalement inférieure à 80 Hz, préférablement comprise entre 10 et 50 Hz.

Ensuite, les signaux en sortie des circuits 3 de type RL, fonction de l'impédance du fil à tester F et de l'impédance du fil de référence FR, sont envoyés vers un amplificateur 5 qui a comme sortie la différence des tensions, proportionnelle a la différence impédance des fils.

La tension, redressée par le redresseur 4, est comparée avec une valeur de tension via une logique dédiée 14 à la gestion de l'alarme.

Le système de la Figure 5 est donc similaire à celui de Figure 1. La tension générée par le circuit RL est comparée, dans le circuit de Figure 5, avec un autre circuit RL calibré, ailleurs dans le circuit 1, et est comparée via le potentiomètre 6.

Les fonctions du voltmètre 7 à zéro central et du commutateur 8 multi-position étant inchangées sur les Figures.

## Revendications

1. Procédé de contrôle de la conformité d'au moins une partie d'un fil (F) de soudage, dans lequel :
a) on soumet au moins une partie d'un fil (F) de soudage à un champ magnétique,
b) on détermine la perméabilité magnétique de la partie de fil (F) considérée,
c) on compare la valeur de perméabilité magnétique déterminée à l'étape b) au moins une valeur de référence, et
d) on déduit de la comparaison de l'étape c), une conformité ou non-conformité de tout ou partie du fil (F) considéré.

2. Procédé selon la revendication précédente, **caractérisé en ce que** la perméabilité magnétique est transformée en un signal de tension électrique à partir duquel on détermine une conformité ou non-conformité de la partie de fil (F) testée.

3. Procédé selon l'une des revendications précédentes, **caractérisé en ce que** la détermination de la perméabilité magnétique est effectuée au moyen d'un circuit (3) comprenant inducteur (L) traversé par le fil (F) à tester.

4. Procédé selon l'une des revendications précédentes, **caractérisé en ce qu'**on met en oeuvre un circuit (3) comprenant, en série, une résistance (R) et un inducteur (L) traversé par le fil (F) à tester.

5. Procédé selon l'une des revendications précédentes, **caractérisé en ce que** :
- à l'étape b), on détecte au moins un signal de tension sinusoïdale,
- on convertit ledit au moins un signal de tension sinusoïdale en au moins un signal de tension continue, et
- à l'étape c), on compare ledit au moins un signal de tension continue avec au moins une valeur de tension de référence.

6. Procédé selon l'une des revendications précédentes, **caractérisé en ce que** ledit au moins un signal de tension sinusoïdale est converti en au moins un signal de tension continue par un redresseur (4), de préférence le signal de tension continue est ensuite amplifié par un amplificateur (5).

7. Procédé selon l'une des revendications précédentes, **caractérisé en ce que** l'inducteur est alimenté par un générateur de tension délivrant une tension de fréquence comprise entre 10 et 80 Hz, de préférence entre 25 et 40 Hz, pour détecter une variation de nuance ou de remplissage, ou comprise entre 200 et 10 000 Hz pour détecter une mauvaise étanchéité du fil.

8. Procédé selon l'une des revendications précédentes, **caractérisé en ce que** le défaut ou la non-conformité du fil considéré sont choisis parmi :
- une variation de la quantité de poudre de remplissage dans un fil fourré,
- une absence totale de poudre de remplissage dans au moins une portion d'un fil fourré,
- une variation de qualité chimique ou métallurgique d'un fil plein ou fourré,
- un changement de type de fil entre deux fils de qualités ou de compositions différentes,
- une mauvaise étanchéité dans au moins une portion d'un fil fourré, et
- une variation de tolérance de diamètre d'un fil.

9. Procédé selon l'une des revendications précédentes, **caractérisé en ce que** le fil est un fil fourré ou un fil plein, de préférence de diamètre compris entre 0,8 et 5 mm.

10. Procédé selon l'une des revendications précédentes, **caractérisé en ce qu'**il est mis en oeuvre sur une ligne de production de fil et que le contrôle s'effectue en continu de manière à tester toute la longueur de fil produite sur ladite ligne.

11. Procédé selon l'une des revendications précédentes, **caractérisé en ce qu'**à l'étape d), lorsqu'on détecte une non-conformité de tout ou partie du fil (F) considéré, une alarme sonore ou visuelle est déclenchée ou une information de non-conformité affichée sur un dispositif d'affichage visuel, tel un écran.

12. Dispositif de contrôle de la conformité d'au moins une partie d'un fil (F) de soudage comprenant :
- un générateur (1) de tension,
- un premier circuit (3) avec un inducteur (L) et une résistance (R) alimenté par le générateur de tension (1) pour créer un champ magnétique au sein de l'inducteur (L),
- un redresseur (5) qui transforme au moins un signal de tension alternative provenant du circuit (3) en au moins un signal de tension continue,
- un amplificateur différentiel (5) apte à et conçu pour comparer au moins un signal de tension continue issu du redresseur (4) avec au moins une valeur de tension de référence,
- un dispositif d'alarme, et
- un système de gestion du signal (14) coopérant avec l'amplificateur différentiel (5) et déclenchant le dispositif d'alarme en cas de détection d'un fil non conforme après comparaison des signaux par l'amplificateur différentiel (5).

13. Dispositif selon la revendication 12, **caractérisé en ce que** le système de gestion du signal (14) est un contrôleur logique programmable ou un ordinateur.

14. Dispositif selon la revendication 12, **caractérisé en ce que** le dispositif d'alarme est sonore ou visuel.

15. Dispositif selon la revendication 12, **caractérisé en ce qu'**il comporte un mémoire pour mémoriser au moins une valeur de tension de référence ou un deuxième circuit (3) avec un second inducteur (L2) et une résistance (R) alimenté par le générateur de tension (1) pour créer un champ magnétique au sein de l'inducteur (L1), un fil de référence (FR) étant placé dans le second inducteur (L2).

## Revendications modifiées

### Revendications modifiées conformément à la règle 137(2) CBE.

**1.** Procédé de contrôle de la conformité d'au moins une partie d'un fil fourré (F) de soudage formé d'une enveloppe externe formée d'une bande métallique et d'un flux de interne formé d'éléments de remplissage, dans lequel :
a) on soumet au moins une partie d'un fil fourré (F) de soudage à un champ magnétique,
b) on détermine la perméabilité magnétique de la partie de fil fourré (F) considérée,
c) on compare la valeur de perméabilité magnétique déterminée à l'étape b) au moins une valeur de référence, et
d) on déduit de la comparaison de l'étape c), une conformité ou non-conformité de tout ou partie du fil fourré (F) considéré, le défaut ou la non-conformité du fil fourré considéré étant choisi parmi :
- une variation de la quantité de poudre de remplissage dans le fil fourré,
- une absence totale de poudre de remplissage dans au moins une portion du fil fourré,
- une variation de qualité chimique ou métallurgique du fil fourré,
- un changement de type de fil entre deux fils fourrés de qualités ou de compositions différentes,
- une mauvaise étanchéité dans au moins une portion du fil fourré, et
- une variation de tolérance de diamètre du fil fourré.

**2.** Procédé selon la revendication précédente, **caractérisé en ce que** la perméabilité magnétique est transformée en un signal de tension électrique à partir duquel on détermine une conformité ou non-conformité de la partie de fil (F) testée.

**3.** Procédé selon l'une des revendications précédentes, **caractérisé en ce que** la détermination de la perméabilité magnétique est effectuée au moyen d'un circuit (3) comprenant inducteur (L) traversé par le fil (F) à tester.

**4.** Procédé selon l'une des revendications précédentes, **caractérisé en ce qu'**on met en oeuvre un circuit (3) comprenant, en série, une résistance (R) et un inducteur (L) traversé par le fil (F) à tester.

**5.** Procédé selon l'une des revendications précédentes, **caractérisé en ce que** :
- à l'étape b), on détecte au moins un signal de tension sinusoïdale,
- on convertit ledit au moins un signal de tension sinusoïdale en au moins un signal de tension continue, et
- à l'étape c), on compare ledit au moins un signal de tension continue avec au moins une valeur de tension de référence.

**6.** Procédé selon l'une des revendications précédentes, **caractérisé en ce que** ledit au moins un signal de tension sinusoïdale est converti en au moins un signal de tension continue par un redresseur (4), de préférence le signal de tension continue est ensuite amplifié par un amplificateur (5).

**7.** Procédé selon l'une des revendications précédentes, **caractérisé en ce que** l'inducteur est alimenté par un générateur de tension délivrant une tension de fréquence comprise entre 10 et 80 Hz, de préférence entre 25 et 40 Hz, pour détecter une variation de nuance ou de remplissage, ou comprise entre 200 et 10 000 Hz pour détecter une mauvaise étanchéité du fil.

**8.** Procédé selon l'une des revendications précédentes, **caractérisé en ce que** les éléments de remplissage contiennent des éléments métalliques et/ou non métalliques.

**9.** Procédé selon l'une des revendications précédentes, **caractérisé en ce que** le fil fourré a un diamètre compris entre 0,8 et 5 mm.

**10.** Procédé selon l'une des revendications précédentes, **caractérisé en ce qu'**il est mis en oeuvre sur une ligne de production de fil et que le contrôle s'effectue en continu de manière à tester toute la longueur de fil produite sur ladite ligne.

**11.** Procédé selon l'une des revendications précédentes, **caractérisé en ce qu'**à l'étape d), lorsqu'on détecte une non-conformité de tout ou partie du fil (F) considéré, une alarme sonore ou visuelle est déclenchée ou une information de non-conformité affichée sur un dispositif d'affichage visuel, tel un écran.

**12.** Dispositif de contrôle de la conformité d'au moins une partie d'un fil fourré (F) de soudage comprenant :
- un générateur (1) de tension,
- un premier circuit (3) avec un inducteur (L) et une résistance (R) alimenté par le générateur de tension (1) pour créer un champ magnétique au sein de l'inducteur (L), et
- un redresseur (5) qui transforme au moins un signal de tension alternative provenant du circuit (3) en au moins un signal de tension continue,
**caractérisé en ce qu'**il comprend en outre :
- un amplificateur différentiel (5) apte à et conçu pour comparer au moins un signal de tension continue issu du redresseur (4) avec au moins une valeur de tension de référence,
- un dispositif d'alarme, et
- un système de gestion du signal (14) coopérant avec l'amplificateur différentiel (5) et déclenchant le dispositif d'alarme en cas de détection d'un fil non conforme après comparaison des signaux par l'amplificateur différentiel (5),
et deux comparateurs à double fenêtre (11, 13), le premier comparateur à double fenêtre (11) permettant de signaler tout défaut de remplissage d'un fil fourré (F) et le deuxième comparateur à double fenêtre (13) permettant de détecter les différences de composition chimique d'un fil fourré ou la jonction entre deux types de fils différent, en particulier un fil plein et un fil fourré.

**13.** Dispositif selon la revendication 12, **caractérisé en ce que** le système de gestion du signal (14) est un contrôleur logique programmable ou un ordinateur.

**14.** Dispositif selon la revendication 12, **caractérisé en ce que** le dispositif d'alarme est sonore ou visuel.

**15.** Dispositif selon la revendication 12, **caractérisé en ce qu'**il comporte une mémoire pour mémoriser au moins une valeur de tension de référence ou un deuxième circuit (3) avec un second inducteur (L2) et une résistance (R) alimenté par le générateur de tension (1) pour créer un champ magnétique au sein de l'inducteur (LI), un fil de référence (FR) étant placé dans le second inducteur (L2).
